Europäisches Patentamt

European Patent Office

Office européen des brevets

(11) Veröffentlichungsnummer: **0 166 769**
**B1**

(12) **EUROPÄISCHE PATENTSCHRIFT**

(45) Veröffentlichungstag der Patentschrift:
08.03.89

(21) Anmeldenummer: **85900455.8**

(22) Anmeldetag: **18.12.84**

(86) Internationale Anmeldenummer:
**PCT/EP 84/00408**

(87) Internationale Veröffentlichungsnummer:
**WO 85/03057 (18.07.85 Gazette 85/16)**

(51) Int. Cl.⁴: **B 65 G  39/12,** B 65 G  15/42,
B 65 G  39/02

(54) **GURTFÖRDERANLAGE.**

(30) Priorität: **30.12.83  DE 3347571**

(43) Veröffentlichungstag der Anmeldung:
**08.01.86 Patentblatt 86/2**

(45) Bekanntmachung des Hinweises auf die Patenterteilung:
**08.03.89 Patentblatt 89/10**

(84) Benannte Vertragsstaaten:
**AT BE CH DE FR GB LI LU NL SE**

(56) Entgegenhaltungen:
**EP-A-0 060 648
CH-A-481 815
DE-B-1 128 826
FR-A-1 260 062
US-A-2 925 903**

**Hebe- und Förderanlagen (Aumund/Mechtold),
Springer-Verlag Berlin, 1969**

(73) Patentinhaber: **Conrad Scholtz GmbH, Am
Stadtrand 55/59, D-2000 Hamburg 70 (DE)**

(72) Erfinder: **NOLTE, Günther, Illbrucksweg 12, D-4130
Moers (DE)**

(74) Vertreter: **Lieck, Hans- Peter, Dipl.- Ing.,
Scherzberg & Undritz Maximiliansplatz 10, D-8000
München 2 (DE)**

EP 0 166 769 B1

## Beschreibung

Die Erfindung betrifft eine Gurtförderanlage zur Förderung von Schüttgut in freiem und insbesondere bergigem Gelände zwischen zwei Endstationen zur Auf- bzw. Abgabe des Schüttgutes.

Übliche Gurtförderanlagen dieser Art arbeiten mit einem flachen Fördergurt, dessen Lasttrum zur Erhöhung der Förderkapazität gemuldet wird. Zwischen den beiden Endstationen erstreckt sich ein durchgehendes Traggerüst, an welchem Tragrollenstationen für die Führung und Unterstützung des Lasttrumes und auch des Rücktrumes des Fördergurtes angebracht sind. Das Traggerüst kann auch durch eine aufgehängte, gespannt gehaltene Seilkonstruktion gebildet sein, vgl. US-A-2 925 903. Ferner wurde bereits vorgeschlagen, vgl. CH-A-481 815, die Tragrollenstationen an separaten, jeweils individuell im Erdboden verankerten Ständern anzubringen. In allen Fällen erteilen die Tragrollenstationen für das Lasttrum diesem die Muldung. Damit die Muldung zwischen zwei aufeinanderfolgenden Tragrollenstationen nicht verloren geht, ist deren gegenseitiger Höchstabstand auf relativ geringe Werte von z. B. 1 bis 2 m und höchstens 4 m beschränkt, entsprechend einem relativen Durchhang des Fördergurtes zwischen benachbarten Tragrollenstationen von maximal 2 %, vgl. Aumund/Mechtold, Hebe- und Förderanlagen, Springer-Verlag, Berlin, 1969, Seiten 12, 27, 28. Das Traggerüst und die relativ dicht beabstandeten Tragrollenstationen stellen einen hohen baulichen Aufwand dar. In schwierigem, insbesondere bergigem Gelände ist wegen der Notwendigkeit, das Traggerüst zwischen den beiden Endstationen zu haben, der Einsatz einer Gurtförderanlage der geschilderten Art oft gar nicht oder nur auf einer aufwendigen künstlichen Trasse möglich.

Statt eines gemuldeten Fördergurtes kann auch ein flach geführter Fördergurt verwendet werden, der mit seitlichen Begrenzungen versehen ist. Die Begrenzungen werden z. B. durch Randabschnitte des Fördergurtes gebildet, die mittels seitlichen Führungsrollen hochgestellt werden, vgl. DE-B-1 128 826. In der Praxis weitaus häufiger werden allerdings für Schüttgut Fördergurte eingesetzt, die einen querstabilen, flach geführten Gurtkörper und zwei seitliche gewellte Randleisten (Wellenkanten) umfassen, vgl. FR-A-1 260 062, EP-A-0 080 648 und Zeitschrift Fördern und Heben 20 (1970) Nr. 13, Seiten 752 bis 756. Auch diese sogenannten Wellenkantengurte hat man bisher immer nur auf durchgehenden Traggerüsten mit relativ kurz voneinander beabstandeten Tragrollen angewandt.

Der Erfindung liegt die Aufgabe zugrunde, eine Gurtförderanlage für Schüttgut zu schaffen, die mit vergleichsweise geringem baulichen Aufwand auskommt und sich dabei gleich wohl in beliebigem, insbesondere auch bergigem und schwierigem Gelände mit Überwindung von Höhenunterschieden ohne weiteres einsetzen läßt.

Ausgehend vom bekannten Stand der Technik, der dem Obergriff des Anspruchs 1 entspricht, wird diese Aufgabe durch die Merkmale des kennzeichnenden Teils des Anspruchs 1 gelöst. Die Unteransprüche beziehen sich auf besondere Ausführungsarten der Erfindung.

Die erfindungsgemäße Gurtförderanlage arbeitet nach dem Prinzip der Seilbahn. Der Fördergurt ist nicht mehr quasi kontinuierlich mittels einer dichten Folge von Tragrollenstationen, sondern nur noch an einzelnen, relativ weit voneinander beabstandeten Stützen unterstützt und geführt, die individuell, also ohne gegenseitige konstruktive Verbindung, jeweils über ein geeignetes Fundament am oder im Erdboden verankert sind. Dadurch entfällt ein durchgehendes Traggerüst. Auch auf die Muldung des Fördergurtes bzw. seines Lasttrumes wird verzichtet. Der flach geführte Fördergurt ist zur Erzielung ausreichender Förderkapazität mit zwei seitlichen gewellten Randleisten versehen, die dem Fördergurt in an sich bekannter Weise einen großen, kastenförmigen Querschnitt geben. Dadurch entfällt die für die Lebensdauer eines Fördergurtes gefährliche Walkung beim Einsatz von Muldenrollen, wie sie bei zu groß gewählten Rollenabständen entsteht. Der zwischen den Stützen frei durchhängende Fördergurt kann in diesen Abschnitten, z. B. unter Windeinfluß, in Querrichtung ausgelenkt werden. Daß er gleichwohl insgesamt in seiner Bahn bleibt, wird durch die Mittel für die seitliche Gradführung beider Trume des Fördergurtes und insbesondere die windabweisenden Profile auf den Randzonen außerhalb der Wellenkanten erreicht. Wegen des Fortfalls des Traggerüstes kann die erfindungsgemäße Gurtförderanlage - wie eine Seilbahn - ohne weiteres auch in schwierigem und insbesondere bergigem Gelände, namentlich in solchem Gelände eingesetzt werden, in welchem bisher ein Transport von Schüttgut mittels einer Gurtförderanlage nicht möglich war. Gleichwohl ist der bauliche Aufwand vergleichsweise gering.

Bei Gurtförderern wird der Abstand zwischen zwei Unterstützungspunkten für den Fördergurt, zwischen denen der Fördergurt durchhängt, also z. B. zwischen zwei Tragrollen, üblicherweise nach folgender Formel berechnet:

$$a = \frac{0.08 \cdot T}{G_G + G_B} \cdot p$$

Hierin bedeuten
a den Abstand zwischen den Unterstützungspunkten in Meter,
T die im betrachteten Fördergurtabschnitt herrschende Gurtzugkraft in N (kp),
$G_G$ das Fördergurtgewicht je Meter in N/m (kp/m),
$G_B$ das Fördergurtgewicht je Meter in N/m (kp/m),

p den relativen Durchhang des Fördergurtes gemessen in vertikaler Richtung, in Prozent des Abstandes a (der relative Durchhang wird auch Durchhangverhältnis genannt).

Die Formel läßt erkennen, daß der Unterstützungsabstand a in einem bestimmten Fördergurtabschnitt, d.h. bei vorgegebener Gurtzugkraft T und natürlich vorgegebenem Gurtgewicht und vorgegebener Beladung proportional zum relativen Durchhang p ist. Bei üblichen Förderanlagen wird der Unterstützungs- bzw. Tragrollenabstand a so gewählt, daß der relative Durchhang 0,8 % bis 1 %, höchstens jedoch 2 % beträgt.

Bei der Erfindung wird von diesem bisher angewandten Prinzip bewußt abgewichen und der gegenseitige Abstand der Trag- und Führungseinrichtungen für das Lasttrum bzw. ihrer Stützen entsprechend einem Durchhang des Lasttrumes des Fördergurtes von mindestens 3,5 %, bevorzugt mindestens 4,5 %, z. B. 5 % festgelegt. Hierdurch ergeben sich Unterstützungsabstände, die weit über die bisher üblichen Höchstmaße von 2 - 4 m hinausgehen und beispielsweise bei 40 m und mehr liegen. Besonders große Unterstützungsabstände ergeben sich bei geneigter oder steiler Förderung, weil hier die Gurtzugkraft groß ist, und zwar werden dabei wegen der in ansteigender Richtung ansteigenden Gurtzugkräfte die Unterstützungsabstände noch umso größer, je kleiner die Entfernung von der oberen Endstation ist.

Die angegebene Bemessungsregel für den Unterstützungsabstand, d.h. den gegenseitigen Abstand der Trag- und Führungseinrichtungen für das Lasttrum soll nicht bedeuten, daß nicht im Einzelfall auch einmal ein kleinerer Abstand, als es sich aufgrund der Bemessungsregel ergibt, gewählt werden kann. Dies kann zur Anpassung an die jeweiligen Gegebenheiten des Geländes erforderlich sein, um z. B. zu verhindern, daß der Fördergurt zwischen zwei Stützen bzw. Trag- und Führungseinrichtungen den Boden berührt. Auch ist es zweckmäßig, den Fördergurt in den ersten Metern hinter der Aufgabe-Endstation und den letzten Metern vor der Abgabe-Endstation nach klassischer Art mit kleinem Durchhang, d.h. auf relativ dicht und gleichmäßig beabstandeten Tragrollen zu führen, um eine einwandfreie Be- und Endladung sicherzustellen.

Aus Gründen einer ökonomischen Verwendung der eingesetzten Stützen wird man vorzugsweise an jeder Stütze sowohl eine Trag- und Führungseinrichtung für das Lasttrum als auch eine Trag- und Führungseinrichtung für das Rücktrum vorsehen. Abweichungen hiervon können z. B. dann angebracht sein, wenn das wegen der fehlenden Belastung weniger stark durchhängende Rücktrum nicht an jeder Stütze einer Führung bedarf.

Bei einer bevorzugten Ausführungsform umfaßt jede Trag- und Führungseinrichtung für das Lasttrum eine ballige Tragtrommel, vorzugsweise mit seitlichen, radial überstehenden Führungsflanschen. Die im Bedarfsfalle mit entsprechend großem Durchmesser auszuführende Tragtrommel erlaubt eine mechanisch sichere Ableitung der auftretenden hohen Stützkräfte für das Lasttrum auf die jeweilige Stütze. Die Balligkeit der Tragtrommel und die seitlichen Führungsflansche stellen einfache Mittel für die seitliche Gradführung des Fördergurtes dar. Hierbei wird das Geradführungsvermögen der balligen Tragtrommel umso größer, je größer der relative Durchhang des Fördergurtes vor und hinter der Tragtrommel und damit der Umschlingungswinkel an der Tragtrommel ist. Der Balligkeit der Tragtrommel kommt also wegen dem bei der erfindungsgemäßen Gurtförderanlage bewußt hoch gewählten relativen Durchhang eine besondere Bedeutung zu. Die Gradführung kann aber auch dadurch unterstützt werden, daß vor und hinter der Tragtrommel, seitlich des Fördergurtes Führungsrollen mit zur Gurtebene senkrechter Drehachse angeordnet sind.

Bei der bevorzugten Ausführungsform umfassen die Trag- und Führungseinrichtungen für das Rücktrum jeweils zwei koaxiale Scheibenräder, die auf zwei, durch seitliches Überstehen des Gurtkörpers über die Wellenkanten gebildeten und damit außerhalb des Förderraumes liegenden Randzonen des Fördergurtes abrollen, wobei Mittel für die Gradführung des Fördergurtes wie bei der Trag- und Führungseinrichtung für das Lasttrum durch zwei seitliche, radial über die Scheibenräder überstehende Führungsflansche gebildet sind.

Jeder der beiden in Fördergurtlängsrichtung durchgehenden Profile aus Gummi oder dergleichen mit seitenwindabweisendem Querschnitt ist so gestaltet, daß es den Strömungswiderstand der benachbarten, vom Gurtkörper hochstehenden Wellenkante gegen über von außen auftreffendem Seitenwind herabsetzt.

Bevorzugt hat jedes Profil einen V-förmigen Querschnitt und liegt mit einem seiner V-Schenkel flach auf dem Gurtkörper auf, wobei sein Scheitel zur Kante des Gurtkörpers weist. Ein solches Profil ist nicht nur leicht zu fertigen, sondern läßt sich auch leicht am Gurtkörper, z. B. durch Aufkleben, anbringen und hat dabei eine hohe Wirkung. Außerdem wird es beim Umlauf des Fördergurtes um die Endtrommeln nicht übermäßig beansprucht oder gar zerstört, weil sich hierbei der zweite, im Normalfall schräg nach oben weisende V-Schenkels des Profils flach auf den ersten, unteren Schenkel auflegen kann.

Um die einwandfreie Führung und Unterstützung des Rücktrums mit zwei Scheibenrädern zu ermöglichen, ist jedes Profil zweckmäßigerweise mit Abstand von der benachbarten Wellenkante angeordnet, so daß ein profilfreier Abschnitt der Randzonen verbleibt, mit welchem die Scheibenräder zusammenwirken können.

Besonders günstig ist es, wenn die Profile in etwa halb so hoch wie die Wellenkanten des Fördergurtes sind.

Im folgenden ist die Erfindung mit weiteren vorteilhaften Einzelheiten anhand eines schematisch dargestellten Ausführungsbeispieles näher erläutert. In den Zeichnungen zeigen:

Figur 1 eine stark vereinfachte Seitenansicht einer Gurtförderanlage zur Abwärtsförderung von Schüttgut in bergigem Gelände,

Figur 2 eine schematisierte Seitenansicht einer Stütze der Gurtförderanlage nach Figur 1 mit zwei Trag- und Führungseinrichtungen für das Lasttrum und das Rücktrum des Fördergurtes der Gurtförderanlage,

Figur 3 eine Stirnansicht in Richtung AB in Figur 1 der Tragtrommel und der Scheibenräder der beiden Trag- und Führungseinrichtungen nach Figur 2.

Die als Ausführungsbeispiel dargestellte Gurtförderanlage ist in einem bergigen, relativ steil ansteigenden Gelände vorgesehen, dessen Kontur durch die Linie 1 angedeutet ist. Die Gurtförderanlage dient zur Abwärtsförderung von Schüttgut von einer oberen Aufgabe-Endstation 2 zu einer unteren Abgabe-Endstation 3. Fördermittel ist ein Fördergurt 4 aus Gummi, der zwischen den beiden Endstationen 2 und 3 endlos umläuft, wobei sich das beladene Lasttrum 5 des Fördergurtes entsprechend der üblichen Anordnung oberhalb des leeren Rücktrums 6 befindet. Auch die beiden Endstationen 2 und 3 sind von üblicher Ausbildung und weisen je eine Endtrommel 8 bzw. 9, einen Aufgabetrichter 10 bzw. einen Abgabetrichter 11 sowie je eine Reihe von Tragrollen 12 bzw. 13 für die beiden Fördergurt-Trume unmittelbar vor und hinter ihren Endtrommeln auf. Die beiden Endstationen bilden in nicht näher gezeigter Weise je eine konstruktive Einheit, die mit geeigneten baulichen Mitteln im Untergrund 7 fest verankert ist.

Zwischen den beiden Endstationen 2 und 3 ist eine Reihe einzelner, voneinander beabstandeter Stützen 14 vorgesehen. Die Stützen 14 sind zwischen den Endstationen längs einer geraden Linie angeordnet und wie die Stützen einer Seilbahn mit geeigneten baulichen Mitteln jeweils individuell im Untergrund bzw. Erdboden fest verankert. Die Stützen 14 haben unterschiedliche Höhen derart, daß Unebenheiten des Geländes in gewissem Maße ausgeglichen werden.

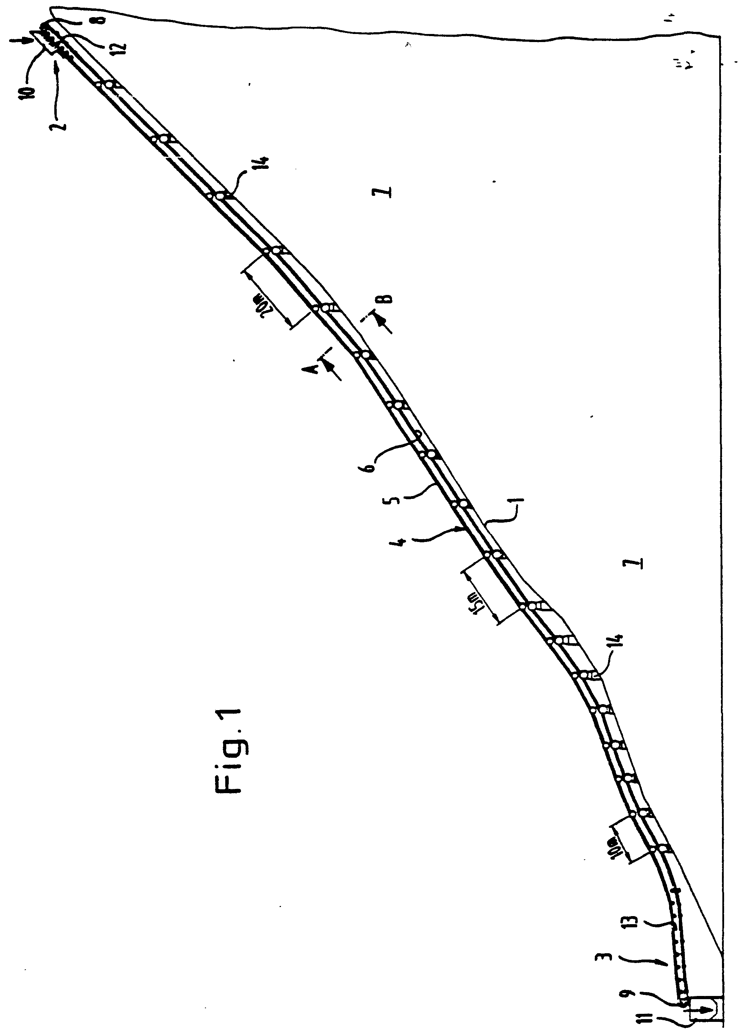

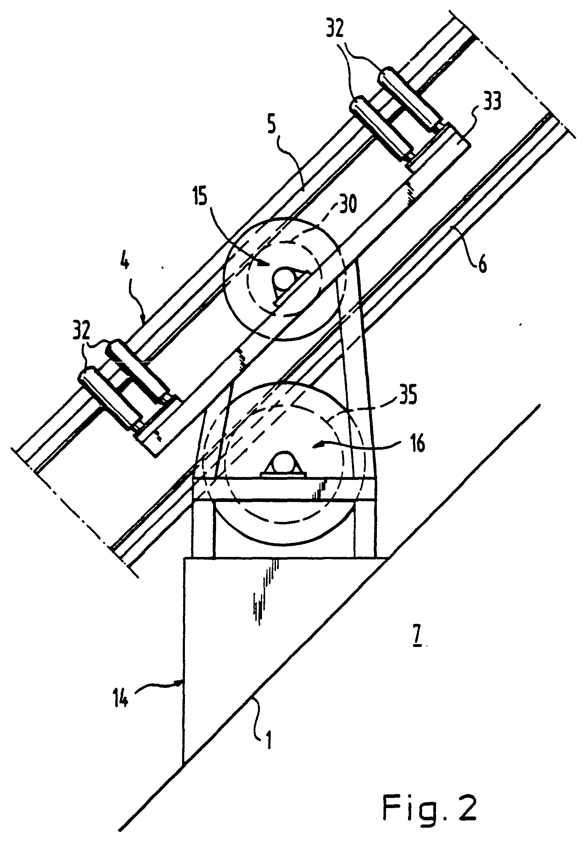

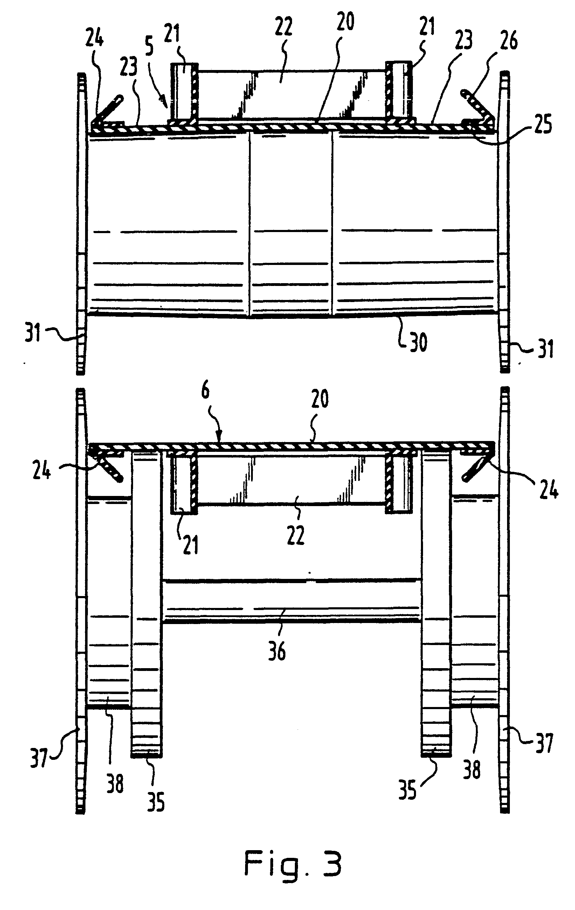

Jede Stütze 14 trägt am oberen Ende eine Trag- und Führungseinrichtung 15 für das Lasttrum 5 des Fördergurtes 4 und darunter eine Trag- und Führungseinrichtung 16 für das Rücktrum 6 des Fördergurtes. Alle Trag- und Führungseinrichtungen für das Lasttrum und alle Trag- und Führungseinrichtungen für das Rücktrum sind jeweils untereinander gleich ausgebildet. Einzelheiten sind in den Figuren 2 und 3 gezeigt. Das über die Trag- und Führungseinrichtungen 15 laufende Lasttrum 5 und das über die Trag- und Führungseinrichtungen 16 laufende Rücktrum 6 hängt zwischen den einzelnen Trag- und Führungseinrichtungen bzw. deren Stützen 14 jeweils frei durch. Der gegenseitige Abstand der Stützen 14 ist so gewählt, daß der relative Durchhang des Lasttrumes zwischen benachbarten Stützen überall in etwa 3,5 % beträgt. Die Stützenabstände, gemessen in Erstreckungsrichtung des Fördergurtes 4, haben beim Ausführungsbeispiel Werte zwischen 9 und 21 m. Drei typische Stützenabstände sind in Figur 1 eingetragen. Alle Stützen 14 sind so ausreichend hoch, daß das Rücktrum 6 überall ohne Bodenberührung läuft.

Der flach, ohne Muldung geführte Fördergurt 4 umfaßt einen querstabilen, d.h. in Querrichtung besonders biegesteifen Gurtkörper 20, auf dessen Tragseite zwei in Längsrichtung durchgehende, gewellte Randleisten, sogenannte Wellenkanten 21 angebracht sind, die zusammen mit dem Gurtkörper 20 einen kastenförmigen Förderquerschnitt definieren, vgl. Figur 3. Zwischen den Wellenkanten sind auf den Gurtkörper 20 in regelmäßigen Längsabständen sich in Querrichtung erstreckende Mitnehmerleisten 22 angebracht, die eine sichere Mitnahme des Schüttgutes auch in den steileren Abschnitten der Förderstrecke gewährleisten. Die Breite des Gurtkörpers 20 ist größer als der Querabstand der Wellenkanten 21, so daß der Gurtkörper mit zwei seitlichen Randzonen 23 in Querrichtung über die Wellenkanten 21 übersteht. Auf jeder Randzone 23 ist tragseitig ein in Längsrichtung durchgehenden Profil 24 aus Gummi angebracht, welches den Strömungswiderstand herabsetzt, den die benachbarte Wellenkante 21 einem auf den Fördergurt einfallenden Seitenwind bietet. Jedes Profil 24 hat einen V-förmigen Querschnitt mit zwei einen Winkel von etwa 45° einschließenden Schenkeln 25 und 26. Mit einem Schenkel 25 ist jedes Profil 24 flach auf den Gurtkörper 20 derart aufgeklebt, daß sein Scheitel mit der Längskante des Gurtkörpers zusammenfällt. Am höchsten Punkt, d.h. am freien Ende des nach oben weisenden Schenkels 26 haben die Profile eine Höhe, die etwa halb so groß wie die Höhe der Wellenkanten 21 ist. Jedes Profil 24 hält einen Abstand zur benachbarten Wellenkante 21 ein, so daß jede Randzone 23 in einem Abschnitt zwischen Wellenkante und Profil profilfrei ist.

Jede Trag- und Führungseinrichtung 15 für das Lasttrum 5 umfaßt zur Unterstützung des Fördergurtes eine an der Stütze 4 frei drehbar gelagerte Tragtrommel 30, deren Durchmesser deutlich größer als derjenige der üblichen Tragrollen ist und deren Breite der Breite des Gurtkörpers 20 entspricht, außerdem Mittel für die seitliche Gradführung des Fördergurtes 4.

Diese Mittel sind durch eine leichte, symmetrische Balligkeit der Tragtrommel 30 sowie durch zwei an den Stirnseiten der Tragtrommel vorgesehene, radial über diese überstehende Führungsflansche 31 gebildet. Die Balligkeit der Tragtrommel 30 bewirkt in an sich bekannter Weise, daß eine zur Trommelmitte gerichtete Kraft auf den Fördergurt 4 ausgeübt wird, wenn dieser seitlich auszuwandern sucht. Zusätzlich wird das seitliche Auswandern durch die Führungsflansche 31 begrenzt. Die Wirkung dieser Mittel zur Gradführung wird ergänzt und unterstützt durch mit Abstand vor und hinter der Tragtrommel 30 seitlich des Fördergurtes 4 paarweise angeordnete Führungsrollen 32. Diese sind mit zur Gurtebene senkrechter Drehachse jeweils an den beiden Enden zweier Träger 33 gelagert, die ihrerseits an der Stütze 14 zu beiden Seiten der Tragtrommel 30 derart angebracht sind, daß sie sich in etwa parallel zum Lasttrum 5 erstrecken.

Jede Trag- und Führungseinrichtung 16 für das Rücktrum 6 umfaßt zwei konzentrische Scheibenräder 35, die mit gegenseitigem axialen Abstand auf einer gemeinsamen Achse 36 frei laufend an der Stütze 14 gelagert sind. Die Breite der Scheibenräder 35 und ihr axialer Abstand sind so gewählt, daß das Rücktrum 6 mit den beiden profilfreien Abschnitten der Gurtkörper-Randzonen 23 auf den Scheibenrädern 35 aufliegen kann, wobei sich die Wellenkanten 21 im Raum zwischen den Scheibenrädern befinden. Wegen seiner Querstabilität biegt sich hierbei der Gurtkörper trotz Abstützung nur in den Randzonen 23 praktisch nicht durch. Als Mittel für die seitliche Gradführung des Fördergurtes 4 besitzen die beiden Scheibenräder 5 an ihrer Außenseite jeweils einen konzentrischen, radial überstehenden Führungsflansch 37, der mit seinem Scheibenrad über eine konzentrische Zwischenscheibe 38 verbunden ist. Die axiale Breite der Zwischenscheiben 38 ist so bemessen, daß der lichte, axiale Abstand der Führungsflansche 37 der gleiche wie bei den Führungsflanschen 31 und etwas größer als die Breite des Gurtkörpers 20 ist. Der Durchmesser der Zwischenscheiben 38 ist so bemessen, daß die Profile 24 in dem Raum zwischen Scheibenrad 35 und Führungsflansch 37 ungehindert Platz finden.

**Patentansprüche**

1. Gurtförderanlage zur Förderung von Schüttgut in freiem und insbesondere bergigem Gelände zwischen einer Aufgabe-Endstation (2) und einer Abgabe-Endstation (3), bei welcher die beiden Trume (5, 6) eines endlosen Fördergurtes (4) aus Gummi oder dergleichen zwischen den beiden Endstationen (2, 3) jeweils über eine Anzahl voneinander beabstandeter Trag- und Führungseinrichtungen (15, 16) laufen, bei welcher der Fördergurt (4) einen querstabilen Gurtkörper (20) und zwei seitliche, gewellte Randleisten (Wellenkanten) (21) umfaßt und an den Trag- und Führungseinrichtungen (15, 16) ungemuldet geführt ist, bei welcher jede Trag- und Führungseinrichtung (15, 16) Mittel (31, 32, 37) für die seitliche Geradführung des Fördergurtes (4) umfaßt, und bei welcher der Fördergurt (4) zwischen den Trag- und Führungseinrichtungen (15, 16) jeweils frei durchhängt,

dadurch gekennzeichnet, daß die Trag- und Führungseinrichtungen (15, 16) jeweil 5 von einer individuell im Erdboden verankerten Stütze (14) getragen sind, daß ihr gegenseitiger Abstand nach der Formel

$$a = \frac{0,08 \cdot T}{G_G + G_B} \cdot p$$

bemessen ist, worin a den gegenseitigen Abstand der Trag- und Führungseinrichtungen (15, 16) in Meter, T die im betrachteten Fördergurtabschnitt herrschende Gurtzugkraft in N (kp), $G_G$ das Fördergutgewicht je Meter in N/m (kp/m), $G_B$ das Fördergurtgewicht je Meter in N/m (kp/m) und p den relativen Durchhang des Fördergurtes, gemessen in vertikaler Richtung, in Prozent des Abstandes a bedeutet und der relative Durchhang p mit mindestens 3,5 % eingesetzt wird, daß der Gurtkörper (20) des Fördergurtes (4) mit zwei seitlichen Randzonen (23) in Querrichtung über die Wellenkanten (21) übersteht und daß auf den Randzonen (23) neben den Wellenkanten (21) je ein in Fördergurt-Längsrichtung durchgehendes Profil (24) aus Gummi oder dergleichen mit einem seitenwindabweisenden Querschnitt angebracht ist.

2. Gurtförderanlage nach Anspruch 1, dadurch gekennzeichnet, daß der relative Durchhang p in die Formel zur Berechnung des Abstandes mit mindestens 4,5 % eingesetzt wird.

3. Gurtförderanlage nach Anspruch 1 oder 2, dadurch gekennzeichnet, daß jede Stütze (14) eine Trag- und Führungseinrichtung (15) für das Lasttrum (5) und darunter eine Trag- und Führungseinrichtung (16) für das Rücktrum (6) trägt.

4. Gurtförderanlage nach Anspruch 1, 2 oder 3, dadurch gekennzeichnet, daß jede Trag- und Führungseinrichtung (15) für das Lasttrum (5) eine ballige Tragtrommel (30) umfaßt, die vorzugsweise mit seitlichen, radial überstehenden Führungsflanschen (31) versehen ist.

5. Gurtförderanlage nach Anspruch 4, dadurch gekennzeichnet, daß jede Trag- und Führungseinrichtung (15) für das Lasttrum (5) mit Abstand vor und hinter der Tragtrommel (30) seitlich des Fördergurtes (4) angeordnete Führungsrollen (32) mit zur Gurtebene senkrechter Drehachse aufweist.

6. Gurtförderanlage nach einem der Ansprüche 1 bis 5, dadurch gekennzeichnet, daß jede Trag- und Führungseinrichtung (16) für das Rücktrum (6) zwei koaxiale, auf den Randzonen (23) des Gurtkörpers (20) abrollende Scheibenräder (35) mit jeweils einem seitlichen, radial überstehenden Führungsflansch (37) umfaßt.

7. Gurtförderanlage nach einem der Ansprüche 1 bis 6, dadurch gekennzeichnet, daß jedes Profil (24) einen V-förmigen Querschnitt hat und mit einem seiner Schenkel (25) flach auf dem Gurtkörper (20) aufliegt, wobei sein Scheitel zur Längskante des Gurtkörpers (20) weist.

8. Gurtförderanlage nach einem der Ansprüche 1 bis 7, dadurch gekennzeichnet, daß jedes Profil (24) mit Abstand von der benachbarten Wellenkante (21) angeordnet ist.

9. Gurtförderanlage nach einem der Ansprüche 1 bis 8, dadurch gekennzeichnet, daß die Profile (24) in etwa halb so hoch wie die Wellenkanten (21) sind.

**Claims**

1. A belt conveyor system for conveying bulk material in an open, more particularly in a mountaneous terrain between a loading terminal station (2) and a delivery terminal station (3), in which system the two ends (5, 6) of an endless conveyor belt (4) of rubber or similar material are running between the two terminal stations (2, 3) over a respective number of spaced supporting and guiding arrangements (15, 16), in which system the conveyor belt (4) comprises a transversely stable belt body (20) and two lateral, undulated skirts (corrugated side walls) (21) and is guided at the supporting and guiding arrangements (15, 16) without being troughed, in which system each of the supporting and guiding arrangements (15, 16) has means (31, 32, 37) for laterally guiding the conveyor belt (4) in a straight path, and in which system the conveyor belt (4) is freely sagging between the respective supporting and guiding arrangements (15, 16), characterized in that the supporting and guiding arrangements (15, 16) are each supported by a support (14) individually anchored in the soil, in that their mutual distance is calculated according to the following equation:

$$a = \frac{0.08 \cdot T}{G_G + G_B} \cdot p$$

wherein a is the mutual distance, in meters, between the supporting and guiding arrangements (15, 16), T is the prevailing tension force, in N (kp), on the conveyor belt section under consideration, $G_G$ is the weight per meter, in N/m (kp/m), of the material to be conveyed, $G_B$ is the weight per meter, in N/m (kp/m), of the conveyor belt, and p is the relative sag of the conveyor belt, in a vertical direction, given as a percentage of the distance a, and into which a figure of at least 3.5 % is substituted for the relative sag p, in that the belt body (20) of the conveyor belt (4) is formed with two lateral edge portions (23) which in transverse direction protrude beyond the corrugated side walls (21), and in that on each edge portion (23), adjacent to the corrugated side wall (21), a profiled, in the longitudinal direction of the conveyor belt continuous element (24) is attached which is made of rubber or a similar material and has a side-wind deflecting cross-sectional shape.

2. Belt conveyor system according to claim 1, characterized in that in the equation for calculating the distance a figure of at least 4.5 % will be substituted for the relative sag p.

3. Belt conveyor system according to claim 1 or 2, characterized in that each support (14) carries a supporting and guiding arrangement (15) for the load-carrying end (5) and, underneath thereof, a supporting and guiding arrangement (16) for the return end (6).

4. Belt conveyor system according to claim 1, 2 or 3, characterized in that each supporting and guiding arrangement (15) for the load-carrying end (5) comprises a crowned supporting drum (30) which is preferably provided with lateral, radially protruding guiding flanges (31).

5. Belt conveyor system according to claim 4, characterized in that each supporting and guiding arrangement (15) for the load-carrying end (5) comprises guiding rollers (32) arranged with their rotational axes at right angles to the belt plane at a distance upstream and downstream of the supporting drum (30) at the sides of the conveyor belt (4).

6. Belt conveyor system according to any one of claims 1 to 5, characterized in that each supporting and guiding arrangement (16) for the return end (6) comprises two disk wheels (35) coaxially arranged to roll on the edge portions (23) of the belt body (20), each having a lateral, radially protruding guiding flange (37).

7. Belt conveyor system according to any one of claims 1 to 6, characterized in that each profiled element (24) is V-shaped in cross-section and has one of its legs (25) resting flat on the belt body (20), its apex pointing to the longitudinal edge of the belt body (20).

8. Belt conveyor system according to any one of claims 1 to 7, characterized in that each profiled element (24) is spaced from the adjacent corrugated side wall (21).

9. Belt conveyor system according to any one of claims 1 to 8, characterized in that the profiled elements (24) have a height approximately half of that of the corrugated side walls (21).

## Revendications

1. Système de transport à bande pour le transport de matériaux en vrac dans un terrain ouvert, plus particulièrement dans un terrain montagneux, entre une station terminale de chargement (2) et une station terminale de déchargement (3), dans lequel les deux brins (5, 6) d'une bande transporteuse sans fin (4) en caoutchouc ou un matériau similaire passent, chacun, entre les deux stations terminales (2, 3) par un nombre d'ensembles de support et de guidage (15, 16) espacés les uns des autres; dans lequel la bande transporteuse (4) comporte un corps de bande (20), stable en direction transversale, et deux parois latérales ondulées (bordures ondulées) (21) et est guidée, aux ensembles de support et de guidage (15, 16) sans former des auges; dans lequel chacun des ensembles de support et de guidage (15, 16) comprend des moyens (31, 32, 37) destinés à guider la bande transporteuse (4) de part et d'autre dans une trajectoire droite; et dans lequel la bande transporteuse (4) s'affaisse librement entre les ensembles respectifs de support et de guidage (15, 16), caractérisé en ce que les ensembles de support et de guidage (15, 16) sont soutenus, chacun, par un pylône (14) individuellement ancré dans le sol; en ce que leur distance mutuelle est calculée selon l'équation

$$a = \frac{0.08 \cdot T}{G_G + G_B} \cdot p$$

dans laquelle a est la distance mutuelle, en mètres, entre les ensembles de support et de guidage (15, 16), T est la force de tension, en N (kp), appliquée au segment considéré de la bande transporteuse, $G_G$ est le poids par mètre, en N/m (kp/m) du matériau à transporter, $G_B$ est le poids par mètre, en N/m (kp/m) de la bande transporteuse, et p est la flèche relative de la bande transporteuse, dans une direction verticale, en pourcentage de la distance a, et dans laquelle on substitue pour la flèche relative p une quantité minimale de 3.5 %; en ce que le corps (20) de la bande transporteuse (4) comporte deux parties marginales latérales (23) qui dépassent les bordures ondulées (21) en direction transversale; et en ce que sur chacune des parties marginales (23), à côté des bordures ondulées (21), est monté un profilé (24), en caoutchouc ou un matériau similaire, continu en direction longitudinale de la bande transporteuse, et ayant une forme en section droite détournant le vent latéral.

2. Système de transport à bande selon la revendication 1, caractérisé en ce que dans l'équation pour le calcul de la distance une quantité minimale de 4,5 % est substituée pour la flèche relative p.

3. Système de transport à bande selon la revendication 1 ou 2, caractérisé en ce que chaque pylône (14) porte un ensemble de support et de guidage (15) pour le brin porteur (5) et, en-dessous, un ensemble de support et de guidage (16) pour le brin de retour (6).

4. Système de transport à bande selon la revendication 1, 2 ou 3, caractérisé en ce que chaque ensemble de support et de guidage (15) pour le brin porteur (5) comprend un tambour de support bombé (30), de préférence muni de joues latérales de guidage (31) radialement en saillie.

5. Système de transport à bande selon la revendication 4, caractérisé en ce que chaque ensemble de support et de guidage (15) pour le brin porteur (5) comprend des rouleaux de guidage (32), disposés à distance en amont et en aval du tambour de support (30), de part et d'autre de la bande transporteuse (4), et ayant leurs axes de rotation perpendiculaires au plan de la bande.

6. Système de transport à bande selon l'une quelconque des revendications 1 à 5, caractérisé en ce que chaque ensemble de support et de guidage (16) pour le brin de retour (6) comprend deux roues à centre plein (35), disposées coaxialement et roulant sur les parties marginales (23) du corps de bande (20), et comportant chacune une joue latérale de guidage (37) radialement en saillie.

7. Système de transport à bande selon l'une quelconque des revendications 1 à 6, caractérisé en ce que chaque profilé (24) a une section droite en V et repose à plat sur le corps de bande (20) par l'une de ses branches (25), son sommet étant orienté vers le bord longitudinal du corps de bande (20).

8. Système de transport à bande selon l'une quelconque des revendications 1 à 7, caractérisé en ce que chaque profilé (24) est espacé de la bordure ondulée (21) voisine.

9. Système de transport à bande selon l'une quelconque des revendications 1 à 8, caractérisé en ce que les profilés (24) ont une hauteur approximativement la moitié de celle des bordures ondulées (21).

Fig. 1

EP 0 166 769 B1

Fig. 2

Fig. 3